# EUROPEAN PATENT SPECIFICATION

(11) **EP 0 743 656 B1**
(45) Date of publication and mention of the grant of the patent: **06.10.1999**
(21) Application number: 96303002.8
(22) Date of filing: 29.04.1996
(51) Int. Cl.: H01B 7/28

(54) **Electric power cables**
Elektrische Energiekabel
Câbles électriques

(30) Priority: 19.05.1995 GB 9510140; 11.12.1995 GB 9525280
(43) Date of publication of application: 20.11.1996
(73) Proprietor: Dussek Campbell Limited, Crayford, Kent DA1 4QJ (GB)
(72) Inventor: Jones, Dai, Crayford, Kent DA1 4QJ (GB); Moore, Simon, Crayford, Kent DA1 4QJ (GB)
(74) Representative: Lewis, Pauline Therese

(56) References cited:
- EP-A- 0 129 485
- EP-A- 0 160 778
- WO-A-95/17756
- DE-A- 4 017 444
- US-A- 3 878 146

## Description

This invention relates to insulated high voltage electric power cables, more particularly to insulated high voltage electric power cables having improved waterproofing.

The invention relates further to the use of vegetable oil based grease as a water blocking agent in an electric power cable.

Electric power is conventionally distributed at high voltages, typically at over a thousand volts and often up to 500,000 volts or more. Power cables that are used for this purpose comprise a metallic conductor core, which is usually in the form of strands of aluminium or copper, and a synthetic polymer insulator covering. There may be a number of insulated conductors in a bundle enclosed within an outer sheath.

The insulator covering has conventionally been provided by a hydrocarbon polymer, for example, a cross-linked polyethylene.

The high voltage power cables can suffer from degradation if water penetrates the core of the cable via the stranded copper or aluminium conductor. This problem is known in the art as "water treeing".

The inventors have tried to overcome the above mentioned problem by filling the spaces in the power cables with grease. The inventors have tried synthetic hydrocarbon greases and greases based on hydrocarbon oils. These greases, however, suffer from the disadvantage that they are absorbed by the cross-linked polyethylene insulation and this causes the cross-linked polyethylene to soften greatly and distort. Silicone greases have been tried but suffer from the disadvantage that they are too expensive for large scale application. High viscosity polybutenes have also been tried and, although an improvement over mineral oil based greases, have not proved entirely satisfactory due to high absorption by the insulation and difficult application.

EP-A-0 160 778 discloses greases that can be used as waterblocking materials for optical fiber cables.

US-A-5,288,796 discloses a friable sealing compound comprising the reaction product of an isocyanate component and a special polyol mixture of polyol components.

The present invention is therefore concerned with the problem of providing a waterproofing agent for high voltage electric power cables insulated with a hydrocarbon polymer, which is compatible with the hydrocarbon polymer and is thus absorbed by the hydrocarbon polymer to a minimum level.

According to one aspect of the present invention (claim 1), there is provided an electric power cable comprising a stranded conductor having a hydrocarbon polymer insulation; characterised in that a space within the hydrocarbon polymer insulation and around the stranded conductor is filled, in part or in full, with a vegetable oil based grease.

According to another aspect of the present invention (claim 2), there is provided an electric power cable comprising a plurality of stranded conductors, at least one of the stranded conductors having a hydrocarbon polymer insulation, the stranded conductors being enclosed within an outer sheath; characterised in that a space within the at least one hydrocarbon polymer insulation and around its stranded conductor is filled, in part or in full, with a vegetable oil based grease.

According to a further aspect of the present invention (claim 3), there is provided an electric power cable comprising a plurality of stranded conductors, at least one of the stranded conductors having a hydrocarbon polymer insulation, the stranded conductors being enclosed within an outer sheath; characterised in that a space within the outer sheath and around the at least one insulated conductor is filled, in part or in full, with a vegetable oil based grease.

The dependent claims describe particular embodiments of the invention.

For those cables which comprise a plurality of insulated conductors, preferably both the space between each conductor strand and its hydrocarbon polymer insulator covering and the space within the outer sheath and between the insulated conductors contain a vegetable oil based grease. The greases used can be the same or different.

The vegetable oil based grease preferably comprises from 3 to 25%, more preferably from 4 to 20%, and even more preferably from 5 to 15%, of a water swellable polymer, the % being based on the combined weight of the grease and the polymer. The water swellable polymer may be any polymer having the desired swelling characteristics. A particularly preferred material is, for example, a cross-linked sodium polyacrylate such as Salsorb 90F registered trade mark supplied by Allied Colloids which gives a grease with a less gritty texture than other water-swelling polymers of this type. Alternatively, other polymers, e.g. special cellulosic materials, may be used. These polymers are sometimes referred to as super-absorbent polymers and some are described, for example, in 'A Swell Idea' by F. Bucholz in Chemistry in Britain, August 1994 pp 452-456.

The advantage of the invention is that the vegetable oil based grease is absorbed by the hydrocarbon polymer insulating material to a lesser extent than conventional hydrocarbon greases, with the result that it causes a reduced amount of softening and swelling of the hydrocarbon polymer insulating material. Also, the use of a water swellable polymer increases resistance to water penetration. The useful life of the insulated power cable can therefore be prolonged.

A grease is a solid or semiliquid substance comprising a thickening or gelling agent in a liquid carrier. The gelling agents used in greases are frequently clays and silicas, although other materials may be used.

When low stress is applied to a grease, the material acts substantially as a solid-like material. If the stress is above a critical value, then the viscosity decreases rapidly and the material flows. The decrease in viscosity is largely reversible because it is typically caused by the rupture of network junctions between filler particles and these junctions can reform following the removal of the supercritical stress.

By vegetable oil based grease we mean a grease that has been obtained from a vegetable oil by the addition of a gelling agent.

The grease may be prepared from the vegetable oil by processes that are well known in the art. The process usually involves mixing the oil with a gelling agent such as silica or a powdered clay, e.g. bentone. Typical amounts of silica are from 3 to 8% and bentone from 7 to 25%, both based on the weight of the oil.

It is preferred that the gelling agent is hydrophobic. Silica can be made hydrophobic by treatment with a polysiloxane and can, for example, be a hydrophobic fumed silica having a BET surface area of between 50 and 400m²/gm.

Suitable vegetable oils for the preparation of greases for use in the present invention include: palm oil, corn oil, linseed oil, rapeseed oil, sun flower oil, coconut oil, olive oil and castor oil.

A particularly suitable oil is castor oil.

Preferred castor oils have a viscosity in the range of from 600 to 900 mm²/s (centistokes) at 25°C.

The vegetable oil based grease preferably has a cone penetration in the range of from 90 to 230 dmm (tenths of a millimetre at) 25 °C. Cone penetration is determined in accordance with the Institute of Petroleum IP test IP 50.

The grease should be preferably compatible with the hydrocarbon polymer insulation. By compatible we mean that the hydrocarbon polymer insulation should have a weight gain of less than 10% according to the compatibility test described below.

More preferably, the vegetable oil based grease and polymer for the insulating material are selected so that the weight gain is less than 5%, most preferably less than 1%.

The test described below measures the weight gain of a sample of polymer: the lower the value, then the lower the absorption of the grease by the polymer and the greater will be the useful life of the insulation.

Polymer provided in the form of a sheet of thickness about 1-2mm is cut into pieces about 30 by 60mm. A sharp knife is used to avoid ragged edges. The pieces are weighed to the nearest 0.1 mg and then immersed in the relevant grease, ensuring that the piece is wholly immersed, and placed in a thermostatically controlled oven at 100°C for seven days.

The pieces of polymer are then removed from the grease and wiped clean so that each is free from surface grease using paper tissue. When successive fresh clean tissues contain no visual traces of grease, the wiping is stopped. The pieces of polymer are then weighed to the nearest 0.1 mg. As a check, the polymer pieces are wiped with clean tissue again and reweighed.

The weight of grease absorbed is the difference between the weight before (the initial weight) and after ageing in the grease. This is expressed as a % by dividing by the initial weight and multiplying by 100.

Since it is preferred that the grease is compatible with the hydrocarbon polymer insulation, it is desired to exclude from the greases materials that do not meet the compatibility test, for example, hydrocarbons, mineral oils and hydrocarbon greases. Preferably less than 5% by weight, more preferably less than 1%, of such materials are present in the vegetable oil based grease employed in the present invention

The introduction of the vegetable oil based grease into the space may be effected by the methods that have been previously described for the introduction of mineral oil based greases into cables, for example, by injection of the grease around a bundle of strands prior to extrusion of the polymer insulation on to the bundle. The grease may be pumped transversely to a bundle of strands as they are brought together and passed through a pipe. The insulation may then be applied by extrusion by known means.

In the case of a cable that comprises a plurality of insulated conductors, the grease may be injected into and/or around the bundle of insulated conductors and the outer covering sheath extruded on to the bundle in known manner.

The grease may be supplied from a drum and fed into a hose by conventional cold drum pumping and injected from the hose into the bundle of strands or insulated conductors.

The invention is illustrated by the following Examples.

### Example

A grease was prepared from the following:

| | |
|---|---|
| castor oil* | 73 |
| Bentone 27 | 23 |
| propylene carbonate | 4 |

| | |
|---|---|
| ^{*} The castor oil was a technical grade (Seatons No 1 Castor Oil) and had a viscosity of 0,7 Pa·s (700 centipoises) at 25°C. | |

The Bentone 27 is an activated modified Hectorite and was supplied by Redland Minerals.

The grease was prepared from the above components in conventional manner by mixing the castor oil and Bentone, without heating, under high shear conditions for 10 to 15 minutes and then adding the propylene carbonate and continuing the shearing for a further 10 to 30 minutes. The thus prepared grease had a cone penetration at 25°C of 190dm (ASTM D217) and was tested for its compatibility with cross-linked polyethylene using the test described above and the performance compared with that of a viscous cable grease comprising a mixture of polybutene and wax, and that of a thixotropic cable grease comprising mineral hydrocarbon oil and fumed silica.

The results are summarised in the following Table _{1.}

**Table 1**

| | |
|---|---|
| Castor oil grease¹ | 0.5% |
| Viscous grease² (polybutene and wax) | 10% |
| medical grade castor oil grease³ | 0.6% |
| Thixotropic cable grease⁴ (mineral hydrocarbon oil and fumed silica) | 215% |

| | |
|---|---|
| ¹ and ³ greases are prepared from commercial grade castor oil or medical grade castor oil respectively as described above. | |
| ² conventional cable grease referred to above. The grease is made and sold by Dussek Campbell under the name INSOJELL 5116 (registered trade mark). | |
| ⁴ grease is made and sold by Dussek Campbell under the name OPTIFILL 5209 (registered trade mark). | |

The following test has been developed to measure the degree to which a water swellable cable filling grease swells in the presence of water:

Using a spatula the grease is placed into one end of a clean glass tube so that the grease fills the tube in the form of a uniform cylinder of height approx. 1 cm. The height is measured and recorded. The tube is mounted on a retort and clamp so that the end containing the grease is at the bottom and is sitting flush on a glass plate. Water is poured into the tube so that the column of water is supported by the plug of grease. The level of water should approximately come to the top of the glass tube. The grease can be seen to swell and the plug of grease grows in height. After a set time the new height is measured and compared to the original height. The swelling can conveniently be expressed as a percentage. A swelling of at least 100% is preferred, but lower percentages may suffice depending on the design of the power cable.

The following test has been developed to determine the efficiency of the water swellable cable filling grease and measures the speed with which the material encapsulates water:

A cup of 100ml capacity similar in shape to that used for a woman's face cream is filled with the compound to be tested. The cup is hit on a flat surface until the surface of material in the cup is level. A cone of depth 1cm and diameter approx. 3cm (at the base) is cut into the surface of the cone using a spatula. 10 drops of deionised water are placed into the cone using a Pasteur pipette. Timing is started as soon as the last drop has fallen. The water swellable grease can be seen to expand as it absorbs the water. The timer is stopped at the appearance of a white residue at the bottom of the cone and a lack of any movement of water on the inside surface. The time is recorded to the nearest second. A time of less than 180 seconds is preferred, although higher times may suffice depending on the design of the power cable.

The invention is further described with reference to the accompanying drawings (not to scale). The drawings illustrate the location of the vegetable oil based grease. In other respects, the construction of the cables is as known in the art.

Fig 1 is a cross section of a conventional high voltage electric power cable.

Fig 2 is a cross section of a high voltage electric power cable of the type used for overhead power lines.

Fig 3 is a cross section of a high voltage electric power cable in which a plurality of insulated conductors are enclosed within an outer sheath.

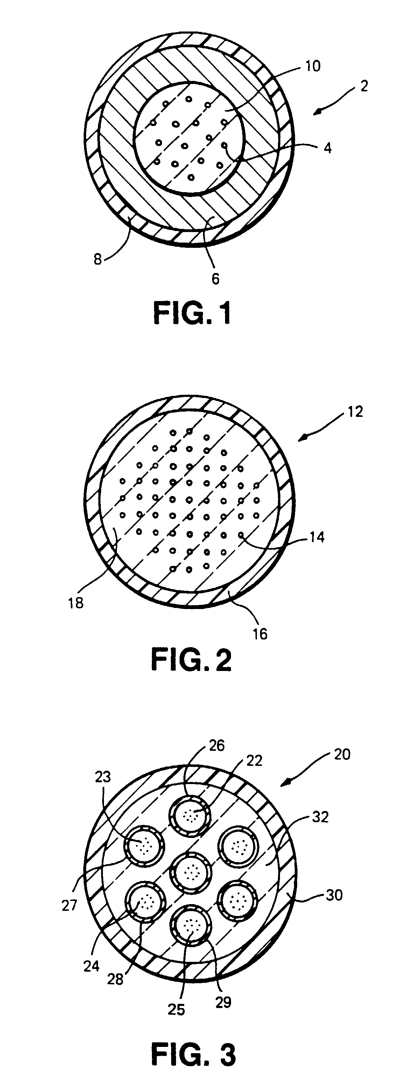

Referring to Fig 1, an electric power cable indicated generally by reference numeral 2 comprises a conductor 4 made up of copper strands and having a cross-linked polyethylene insulation covering 6. Enclosing the cross-linked polyethylene insulation 6 is a tough outer sheath 8. The space 10 between the conductor 4 and the cross-linked polyethylene insulation covering 6 is filled with a castor oil based grease containing 10% by weight of Salsorb 90F supplied by Allied Colloids.

Referring to Fig 2, an electric power cable of the type used in overhead power transmission is indicated generally by numeral 12. The cable comprises conductors 14 made up of copper strands enclosed within a thin insulator 16 of cross-linked polyethylene. The space 18 between the conductors 14 and the thin insulator 16 is filled with a castor oil based grease containing 10% by weight of Salsorb 90F (registered trade mark) supplied by Allied Colloids.

Referring to Fig 3, a multi conductor electric power cable is indicated generally by reference numeral 20. The cable comprises conductors 22,23,24, 25 each made up of strands of copper and covered with a cross-linked polyethylene insulator 26,27,28,29 respectively. The insulated conductors are enclosed within an outer sheath 30. The space 32 between the insulated conductors and the outer sheath 30 is filled with a castor oil based grease containing 10% by weight of Salsorb 90F (registered trade mark) supplied by Allied Colloids. The space between the strands within each insulated conductor is also filled with a castor oil based grease.

## Claims

1. An electric power cable (2) comprising a stranded conductor (4) having a hydrocarbon polymer insulation (6), characterised in that a space (10) within the hydrocarbon polymer insulation and around the stranded conductor is filled, in part or in full, with a vegetable oil based grease.

2. An electric power cable (12) comprising a plurality of stranded conductors (14), at least one of the stranded conductors having a hydrocarbon polymer insulation (16), the stranded conductors being enclosed within an outer sheath; characterised in that a space (18) within the at least one hydrocarbon polymer insulation and around its stranded conductor is filled, in part or in full, with a vegetable oil based grease.

3. An electric power cable (20) comprising a plurality of stranded conductors (22,23,24,25), at least one of the stranded conductors having a hydrocarbon polymer insulation, the stranded conductors being enclosed within an outer sheath; characterised in that a space (32) within the outer sheath and around the at least one insulated conductor is filled, in part or in full, with a vegetable oil based grease.

4. The electric power cable as claimed in claims 1, 2 or 3, wherein the vegetable oil based grease is a castor oil based grease.

5. The electric power cable as claimed in claim 4, wherein the castor oil based grease is prepared from castor oil and a hydrophobic gelling agent.

6. The electric power cable as claimed in claims 4 or 5, wherein the castor oil used for preparing the castor oil based grease has a viscosity of from 600 to 900 mm²/s (centistokes) at 25°C.

7. The electric power cable as claimed in any one of the preceding claims, wherein the vegetable oil based grease comprises from 3 to 25%, preferably fron 5 to 15%, of a water swellable polymer.

8. The electric power cable as claimed in claim 7, wherein the water swellable polymer is a cross-linked sodium polyacrylate.

9. Use of a vegetable oil based grease as a water blocking agent in an insulated electric power cable to reduce swelling of hydrocarbon polymer components cf the electric power cable that contact the water blocking agent.

10. Use of a vegetable oil based grease as a water blocking agent for an insulated electric power cable comprising hydrocarbon polymer, so that the hydrocarbon polymer has a weight gain of less than 10%.

## Patentansprüche

1. Elektrisches Starkstromkabel (2), das einen verseilten Leiter (4) mit einer Kohlenwasserstoffpolymer-Isolierung (6) aufweist, dadurch gekennzeichnet, daß ein Raum (10) in der Kohlenwasserstoffpolymer-Isolierung und um den verseilten Leiter teilweise oder ganz mit einem auf Pflanzenöl basierenden Fett gefüllt ist.

2. Elektrisches Starkstromkabel (12), das zahlreiche verseilte Leiter (14) aufweist, wobei mindestens einer der verseilten Leiter eine Kohlenwasserstoffpolymer-Isolierung (16) hat und die verseilten Leiter von einem Außenmantel umhüllt sind; dadurch gekennzeichnet, daß ein Raum (18) in der mindestens einen Kohlenwasserstoffpolymer-Isolierung und um deren verseilten Leiter teilweise oder ganz mit einem auf Pflanzenöl basierenden Fett gefüllt ist.

3. Elektrisches Starkstromkabel (20), das zahlreiche verseilte Leiter (22, 23, 24, 25) aufweist, wobei mindestens einer der verseilten Leiter eine Kohlenwasserstoffpolymer-Isolierung hat und die verseilten Leiter von einem Außenmantel umhüllt sind; dadurch gekennzeichnet, daß ein Raum (32) im Außenmantel und um den mindestens einen isolierten Leiter teilweise oder ganz mit einem auf Pflanzenöl basierenden Fett gefüllt ist.

4. Elektrisches Starkstromkabel gemäß den Ansprüchen 1, 2 oder 3, wobei das auf Pflanzenöl basierende Fett ein auf Rizinusöl basierendes Fett ist.

5. Elektrisches Starkstromkabel gemäß Anspruch 4, wobei das auf Rizinusöl basierende Fett aus Rizinusöl und einem hydrophoben Geliermittel hergestellt wird.

6. Elektrisches Starkstromkabel gemäß Anspruch 4 oder 5, wobei das Rizinusöl in dem auf Rizinusöl basierenden Fett eine Viskosität von zwischen 600 und 900 mm²/s (Zentistokes) bei 25°C aufweist.

7. Elektrisches Starkstromkabel gemäß jedem der vorstehenden Ansprüche, wobei das auf Pflanzenöl basierende Fett zwischen 3 und 25% und vorzugsweise zwischen 5 und 15% eines in Wasser aufquellenden Polymers aufweist.

8. Elektrisches Starkstromkabel gemäß Anspruch 7, wobei das in Wasser aufquellende Polymer ein vernetztes Natriumpolyacrylat ist.

9. Einsatz eines auf Pflanzenöl basierenden Fettes als Wasserblockiermittel in einem isolierten elektrischen Starkstromkabel zur Reduzierung des Aufquellens der Kohlenwasserstoffpolymer-Bestandteile des elektrischen Starkstromkabels, die in Kontakt mit dem Wasserblockiermittel stehen.

10. Einsatz eines auf Pflanzenöl basierenden Fettes als Wasserblockiermittel für ein isoliertes elektrisches Starkstromkabel, das ein Kohlenwasserstoffpolymer aufweist, so daß das Kohlenwasserstoffpolymer eine Gewichtszunahme von weniger als 10% hat.

## Revendications

1. Un câble d'énergie électrique (2) se composant d'un conducteur toronné (4) comportant un isolant en polymère à base d'hydrocarbures (6), caractérisé en ce qu'un espace (10) dans l'isolant en polymère à base d'hydrocarbures et autour du conducteur toronné est rempli, en partie ou en totalité, d'une graisse à base d'huile végétale.

2. Un câble d'énergie électrique (12) se composant d'une pluralité de conducteurs toronnés (14), au moins un des conducteurs toronnés comportant un isolant en polymère à base d'hydrocarbures (16), les conducteurs toronnés étant enclos dans une gaine extérieure; caractérisé en ce qu'un espace (18) dans l'au moins un isolant en polymère à base d'hydrocarbures et autour de son conducteur toronné est rempli, en partie ou en totalité, d'une graisse à base d'huile végétale.

3. Un câble d'énergie électrique (20) se composant d'une pluralité de conducteurs toronnés (22, 23, 24, 25), au moins un des conducteurs toronnés comportant un isolant en polymère à base d'hydrocarbures, les conducteurs toronnés étant enclos dans une gaine extérieure; caractérisé en ce qu'un espace (32) dans la gaine extérieure et autour de l'au moins un conducteur isolé est rempli, en partie ou en totalité, d'une graisse à base d'huile végétale.

4. Le câble d'énergie électrique comme revendiqué dans les revendications 1, 2 ou 3, dans lequel la graisse à base d'huile végétale est une graisse à base d'huile de ricin.

5. Le câble d'énergie électrique comme revendiqué dans la revendication 4, dans lequel la graisse à base d'huile de ricin est préparée à partir d'huile de ricin et d'un gélatinisant hydrophobe.

6. Le câble d'énergie électrique comme revendiqué dans la revendication 4 ou 5, dans lequel l'huile de ricin dans la graisse à base d'huile de ricin a une viscosité comprise entre 600 et 900 mm²/s (centistokes) à 25°C.

7. Le câble d'énergie électrique comme revendiqué dans l'une quelconque des revendications précédentes, dans lequel la graisse à base d'huile végétale comprend entre 3 et 25%, de préférence entre 5 et 15%, d'un polymère hydrogonflable.

8. Le câble d'énergie électrique comme revendiqué dans la revendication 7, dans lequel le polymère hydrogonflable est un polyacrylate de sodium réticulé.

9. Utilisation d'une graisse à base d'huile végétale comme agent de blocage d'eau dans un câble d'énergie électrique isolé pour réduire le gonflement de composants en polymère à base d'hydrocarbures du câble d'énergie électrique qui entrent en contact avec l'agent de blocage d'eau.

10. Utilisation d'une graisse à base d'huile végétale comme agent de blocage d'eau pour un câble d'énergie électrique isolé se composant de polymère à base d'hydrocarbures, de sorte que le polymère à base d'hydrocarbures a un gain de poids inférieur à 10%.
